Europäisches Patentamt

European Patent Office

Office européen des brevets

(19)

(11) **EP 1 191 370 A1**

(12) **EUROPEAN PATENT APPLICATION**

(43) Date of publication:
27.03.2002 Bulletin 2002/13

(51) Int Cl.[7]: **G02B 6/22**, G02B 6/16

(21) Application number: 00203181.3

(22) Date of filing: 14.09.2000

(84) Designated Contracting States:
**AT BE CH CY DE DK ES FI FR GB GR IE IT LI LU MC NL PT SE**
Designated Extension States:
**AL LT LV MK RO SI**

(71) Applicant: **UNIVERSITY OF LIEGE**
**4000 Liège (BE)**

(72) Inventors:
• **Lemaire, Philippe, Dr., Universite de Liege**
**4031 Angleur (BE)**
• **Scauflaire, Veronique, Universite de Liege**
**4031 Angleur (BE)**

(54) **A monomode optical fiber**

(57)    A monomode optical fibre provided for transporting light having a wavelength $\lambda$ with $480 \leq \lambda \leq 550$ nm, said fibre comprising a core made of a first transparent dielectric material, having a first refractive index $n_c$ and a substantially circular cross-section with a radius dimension a, said fibre further comprising a first cladding coaxially applied on said core and made of a second transparent dielectric material having a second refractive index $n_{m1}$, wherein $n_{m1} < n_c$, The values of $n_c$ and $n_{m1}$ are chosen in such a manner that the numerical aperture

$$\left( NA = \sqrt{n_c^2 - n_{m1}^2} \right)$$

is less than 0.1 and wherein said radius dimension a > 2 µm.

Fig. 1

## Description

The invention relates to a monomode optical fibre provided for transporting light having a wavelength $\lambda$ with $480 \leq \lambda \leq 550$ nm, said fibre comprising :

- a core made of a first transparent dielectric material, having a first refractive index $n_c$ and a substantially circular cross-section with a radius dimension a;
- a first cladding coaxially applied on said core and made of a second transparent dielectric material having a second refractive index $n_{m1}$, wherein $n_{m1} < n_c$;

Such a monomode optical fibre is known from US-A-3,997,241. The known optical fibre has a core surrounded by the first and a second cladding. The first refractive index being higher than the second refractive index . The purpose of using two different materials with respective refractive indices is to reduce the transmission loss occurring when the fibre is bent. The use of a monomode optical fibre is imposed by the constraint that the spatial coherence of the transmitted laser light should be maintained.

A drawback of the known monomode optical fibres is that there is a severe limitation inhibiting a transport of multi-watt laser light. This limitation is caused by a non-linear optical effect, called Brillouin scattering threshold, imposing a threshold $P_B$ beyond which the light is no longer transmitted by the optical fibre.

It is an object of the present invention to realise a monomode optical fibre enabling an efficient light transport even with light intensities higher than 4W.

For this purpose, a monomode optical fibre according to the present invention is characterised in that the values of $n_c$, and $n_{m1}$ are chosen in such a manner that the numerical aperture

$$\left( NA = \sqrt{n_c^2 - n_{m1}^2} \right)$$

is less than 0.1 and wherein said radius dimension a > 2$\mu$m. The Brillouin scattering threshold is mainly determined by the cross-section of the core and the effective length of the fibre. Since a monomode fibre is used, the following equation has to be satisfied :

$$2 \pi a \, NA/\lambda < 2.401$$

where $\lambda$ is the wavelength of the transported light. So by choosing the refractive indices of the two transparent materials in such a manner that NA < 0.1, it is possible to increase the radius a of the core without getting into conflict with the above mentioned equation. Since the Brillouin scattering threshold is mainly determined by the cross-section of the core, an increase of the cross-section enables to raise that threshold value and consequently the power of the transmitted light.

A first preferred embodiment of a monomode optical fibre according to the present invention is characterised in that said fibre further comprises a second cladding coaxially applied on said first cladding and made of a third transparent dielectric material having a third refractive index $n_{m2}$, wherein $n_{m2} > n_{m1}$. The application of a second cladding enables to limit the dimension of the first cladding without affecting the characteristics of a cladding.

Preferably said first refractive index $n_c$ and said third refractive index $n_{m2}$ have a same value. In such a manner, the second cladding has the same refractive index as the one of the core and enable an easy manufacturing

A second preferred embodiment of a monomode optical fibre according to the present invention is characterised in that said first and third transparent dielectric material are formed by pure silicon and said second transparent dielectric material by doped silicon. Silicon is particularly suitable for optical fibre and can easily be doped. The use of doped silicon for the second material enables to select an adequate doping substance in order to obtain the required numerical aperture. Moreover, the combination of doped silicon with pure silicon enables to easily combine the different subsequent materials.

A third preferred embodiment of a monomode optical fibre according to the present invention is characterised in that said fibre is enveloped with a resilient material in such a manner as to limit the bending radius of the fibre to minimum 5 cm. By limiting the bending radius of the fibre, losses due to excessive bending are limited.

A fourth preferred embodiment of a monomode optical fibre according to the present invention is characterised in that an end-wall of the fibre has an inclined end-face having an inclination angle

$$\theta_{cl} > \frac{1}{2}\left[ \left( \frac{\pi}{2} - a\sin\left( \frac{n_c}{n_{ml}} \right) + a\sin\left( \frac{NA}{n_c} \right) \right) \right]$$

By imposing such an inclination angle, it is avoided that light reflecting against the end-wall would be reflected back into the fibre and would thus perturb the light transmitted through the fibre.

Preferably, the extremity of the fibre is provided with an end-piece having a cavity for receiving said extremity, a bottom of said cavity being provided with a hole through which said core extends. This enables an easy coupling of the fibre to the light source.

The invention will now be described in more details with reference to the drawings, showing a preferred embodiment of an optical fibre according to the invention.

In the drawings :

figure 1 shows a cross-section through the different layers of an optical fibre according to the present invention;
figure 2 illustrates the optical fibre with the resilient material applied around;
figure 3 shows the end-wall of the optical fibre without end-piece;
figure 4 shows the end-wall of the optical fibre provided with transparent material; and
figure 5 shows the optical fibre provided with its end-piece.

In the drawings a same reference sign has been assigned to a same or analogous element.

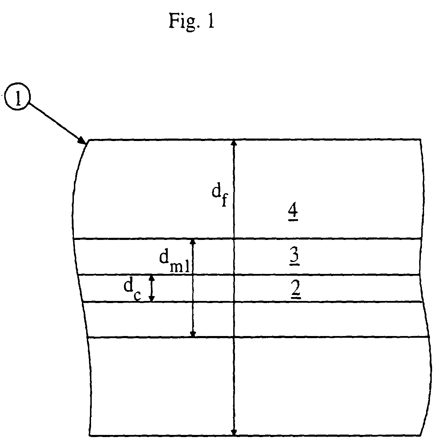

As illustrated in figure 1, the monomode optical fibre 1 comprises a core 2, surrounded by a first cladding 3 which is further surrounded by a second cladding 4. The optical fibre is provided for transporting light having a wavelength $\lambda$ situated between $480 \leq \lambda \leq 550$ nm. Typically the optical fibre is provided for transporting laser light.

The spatial coherence of the laser beam has to be accurately maintained in order to enable interferometric operations. Such operations are frequently applied in several technical domains. For such operations it is necessary to transport the laser beam from its source to the place where the operation has to be performed. Several constraints however limit an efficient transport of the laser beam, in particular when multi-watt visible laser light is concerned.

The main limitation is due to a non-linear optical effect called Brillouin scattering threshold. When the power of the light transmitted via a fibre is higher than that threshold $P_B$, that light can no longer be transmitted by means of the fibre. The value of that threshold is determined by two fibre parameters being the cross-section or effective area (A) of the fibre core 2, which is the place where the light is effectively transported, and the length of the fibre. This can be expressed as :

$$P_B \ (:) \ A/L \ \text{eff} \tag{1}$$

where

$$L \ \text{eff} = (1 - \exp (\alpha \ L))/\alpha \tag{2}$$

L eff being the effective fibre length, $\alpha$ the absorption coefficient and L the physical length of the fibre. For light having a wavelength situated in the visible or near infrared range, $\alpha$ is small which signifies that L eff $\approx$ L for L being a few meters.

For interferometric purpose, the spatial coherence must be maintained and therefore the fiber must be monomode. This has as consequence that:

$$2\pi \ a \ NA/\lambda < 2.401 \tag{3}$$

wherein a is the dimension of the radius of the core (the core being substantially circular shaped), NA the numerical aperture of the fibre and $\lambda$ the wavelength of the transmitted light. The numerical aperture being defined as

$$NA = \sqrt{(n_c^2 - n_{m1}^2)} \tag{4}$$

wherein $n_c$ and $n_{m1}$ are the refractive indices of the core (first refractive index) respectively of the first cladding (second refractive index) $n_{m2}$ being the third refractive index of the second (4) cladding but which has no real effective contribution to the numerical aperture.

The sin$^{-1}$ (NA) defines the maximum input angle along which the light is coupled into the fibre. This signifies that the input angle is relevant for the transmitting properties of the fibre. Based on these constraint, commercially available optical fibres generally have a value NA = 0.1. Referring to expression (3), it can be shown that the value of a is limited to $1.5 \leq a \leq 2$ $\mu$m, which leads to values of $P_B = 700$ mW for $480 \leq \lambda \leq 550$ nm and L = 5 m.

In order now to increase the Brillouin scattering threshold and consequently to enable light with a power higher than 700 mW to be transported by the fibre, the present invention proposes to reduce the numerical aperture NA while maintaining the monomode character of fibre and without affecting the transmission efficiency which is situated between 70 and 80 %.

For this purpose the values of the refractive indices $n_c$, $n_{m1}$ and $n_{m2}$ of the core, the first and second cladding have been chosen in such a manner that NA < 0.1 with a core radius a > 2 $\mu$m. Preferably NA = 0.055 and a = 3 $\mu$m. To obtain such values a fibre structure having preferably $n_c > n_{m1}$ and $n_{m2} = n_c$ is chosen. The difference between $n_c$ and $n_{m1}$ should preferably be $10^{-3}$. This is obtained for example by using a core and a second cladding which are made of pure silicon whereas the first cladding is made of doped silicon. In such a manner, the transparent dielectric materials forming the fibre are compatible with each other and the value of $n_{m1}$ can be determined by the appropriate choice of the doping material. The chosen doping material is for example boron or fluorine. Silicon is an appropriate material for the core and the second cladding as it enables to minimise absorption losses.

By limiting the numerical aperture and increasing the core radius, the constraints of a monomode fibre are respected since $2\pi a$ NA/$\lambda$ < 2.401. The numerical aperture reduction allow to use a larger core radius and to couple more light power into the fibre.

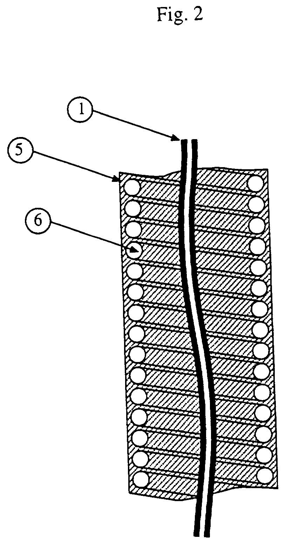

Figure 2 shows a further embodiment of the optical fibre 1 according to the present invention, wherein the core and both claddings are enveloped with a resilient material 5 in such a manner as to limit the bending radius r of the fibre to minimum 5 cm. Indeed, if the bending radius exceeds 5 cm, the light travelling through the fibre is too heavily bent so that losses due to reflections inside the fibre would occur. Moreover, a too heavy bending of the fibre could irreversibly deform the core or break the cladding. Besides limiting the bending, the resilient material also protects the core and the claddings.

The resilient material 5 should also be resistant to impacts and mechanical elongation. Preferably, a polymer is used as resilient material 5. To further improve the resistance, a spring 6 is preferably enrolled around the second cladding. The spires of that spring being embedded into the resilient material 5. The spring is preferably made of metal and enables a bending of the fibre while maintaining the internal volume free i.e. the place where the core and the claddings are located.

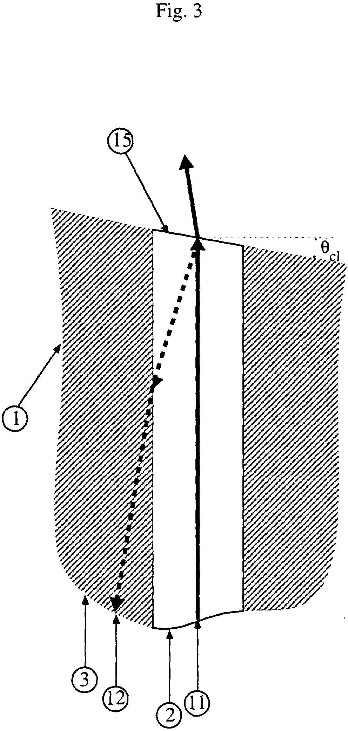

As illustrated in figure 3, the end-wall 15 of the fibre 1 has an inclined end-face in order to eliminate Fresnel reflections at the end-wall. The minimum inclination angle is determined by

$$\theta_{cl} > \frac{1}{2}\left[\frac{\pi}{2} - a\sin\left(\frac{n_c}{n_m}\right) + a\sin\left(\frac{NA}{n_c}\right)\right]$$

Depending on the values of NA and $n_c$, the inclination angle should be at least 2°. Preferably a value $\theta = 4°$ is chosen with respect to the central core axis 11 in order to avoid that light 12 reflected against the end-wall would be coupled back in the core and the cladding. The choice of that inclination angle also contributes to reduce the Brillouin scattering threshold. Indeed, the reflected light 12 initiates the Brillouin effect in that it attenuates the propagated light.

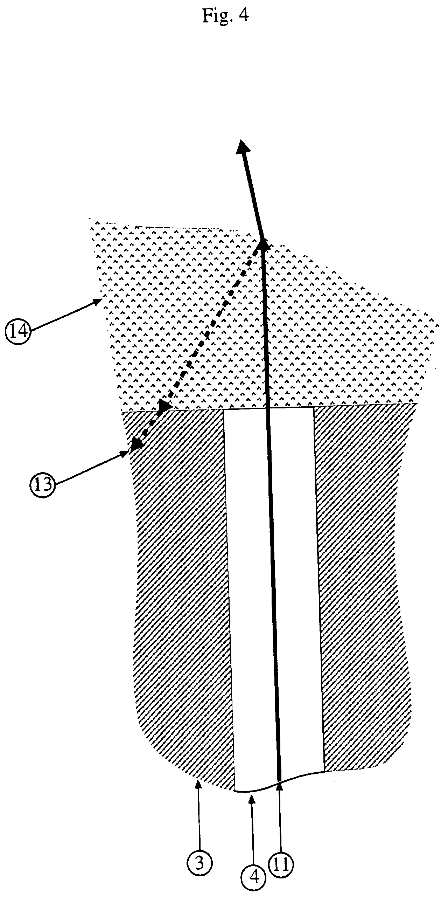

Experiments have proven that the fibre according to the invention enables to transport laser light with a wavelength $480 \le \lambda \le 550$ nm over 5 m with a power of at least 4W and an efficiency of 70 to 80 %. Other techniques such as anti-reflection treatment, tin multilayers or the addition at the end-wall (see figure 4) of a transparent material 14 deflecting reflected light 13 outside the main axis 11 could also be applied to reduce the Brillouin scattering threshold.

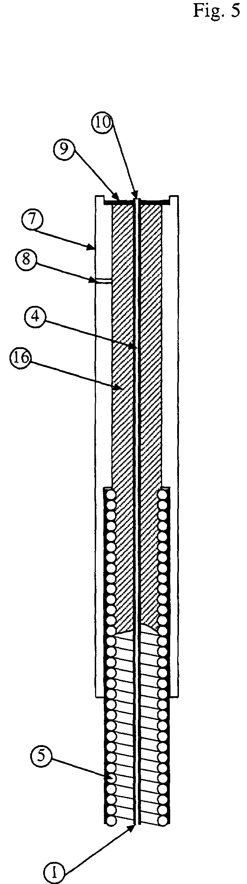

Figure 5 shows the monomode optical fibre according to the present invention and provided with an end-piece 7. The end-piece serves as an auxiliary tool for coupling the light into the core. The presence of a core surrounded by the first and second cladding and the small numerical aperture renders coupling between the laser source and the fibre difficult. A bad coupling will lead to light being coupled into the cladding and thus to a loss of the spatial coherence. The end-piece or mandrel 7 according to the present invention enables to facilitate the coupling and reduce the loss.

The end-piece comprises a rigid cylindrical tube forming a cavity into which the cladding 4 is inserted. At a bottom of that cavity a hole 10 formed inside a plate 9 is applied. The fibre exits through that hole. The cavity is filled with a transparent material 16, preferably epoxy resin, having a higher refractive index than the one of the core or the second cladding. That transparent material is applied via a further hole 8 applied in a lateral side of the end-piece.

In such a manner, the light coupled into the second cladding can escape before reaching the end of the fibre. Indeed, since the refractive index of that material is higher than the one of the second cladding, the light can escape as it does no longer feel a total reflection

## Claims

1. A monomode optical fibre provided for transporting light having a wavelength $\lambda$ with $480 < \lambda \le 550$ nm, said fibre comprising a core made of a first transparent dielectric material, having a first refractive index $n_c$ and a substantially circular cross-section with a radius dimension a, said fibre further comprising a first cladding coaxially applied on said core and made of a second transparent dielectric material having a second refractive index $n_{m1}$, wherein $n_{m1} < n_c$,
   **characterised in that** the values of $n_c$ and $n_{m1}$ are chosen in such a manner that the numerical aperture

   $$\left(NA = \sqrt{n_c^2 - n_{m1}^2}\right)$$

   is less than 0.1 and wherein said radius dimension a > 2 µm.

2. A monomode optical fibre as claimed in claim 1, **characterised in that** said fibre further comprises a second cladding coaxially applied on said first cladding and made of a third transparent dielectric material having a third refractive index $n_{m2}$, wherein $n_{m2} > n_{m1}$.

3. A monomode optical fibre as claimed in claim 2, **characterised in that** said first refractive index $n_c$ and said third refractive index $n_{m2}$ have a same value.

4. A monomode optical fibre as claimed in claim 2 or 3, **characterised in that** said first and third transparent dielectric material are formed by pure silicon and said second transparent dielectric material by doped silicon.

5.  A monomode optical fibre as claimed in anyone of the claims 1 to 4, **characterised in that** said fibre is enveloped with a resilient material in such a manner as to limit the bending radius of the fibre to minimum 5 cm.

6.  A monomode optical fibre as claimed in claim 5, **characterised in that** a spring is embedded in said resilient material, the spires of said spring being enrolled around the second cladding.

7.  A monomode optical fibre as claimed in claim 5 or 6, **characterised in that** said resilient material is formed by a polymer.

8.  A monomode optical fibre as claimed in anyone of the claims 1-7, **characterised in that** an end-wall of the fibre has an inclined end-face having an inclination angle

$$\theta_{cl} > \frac{1}{2}\left[\frac{\pi}{2} - a\sin\left(\frac{n_c}{n_{ml}}\right) + a\sin\left(\frac{NA}{n_c}\right)\right]$$

9.  A monomode optical fibre as claimed in anyone of the claims 1-8, **characterised in that** an extremity of the fibre is provided with an end-piece having a cavity for receiving said extremity, a bottom of said cavity being provided with a hole through which said core extends.

10. A monomode optical fibre as claimed in claim 9, **characterised in that** said cavity is further filled up with transparent material having a higher refractive index than said third refractive index.

Fig. 1

Fig. 2

Fig. 3

Fig. 4

Fig. 5

**European Patent Office**

**EUROPEAN SEARCH REPORT**

Application Number

EP 00 20 3181

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 1 412 884 A (ZEISS STIFTUNG) 5 November 1975 (1975-11-05) | 1 | G02B6/22 G02B6/16 |
| Y | * page 2, line 67 - line 105 * | 2,3 | |
| D,Y | US 3 997 241 A (NISHIDA SHIGEO ET AL) 14 December 1976 (1976-12-14) * column 8, line 7 - line 25; figure 5 * | 2,3 | |
| X | DE 31 28 174 A (SIEMENS AG) 3 February 1983 (1983-02-03) * page 3, line 11 - line 17 * * page 5, line 5 - line 6 * | 1 | |
| X | US 4 089 586 A (FRENCH WILLIAM GEORGE ET AL) 16 May 1978 (1978-05-16) * column 3, line 66 - column 5, line 6; figures 1,2 * * claim 1 * | 1 | |
| X | US 5 640 473 A (STRAAYER RONALD J ET AL) 17 June 1997 (1997-06-17) * column 5, line 11 - line 16 * | 1 | TECHNICAL FIELDS SEARCHED (Int.Cl.7) G02B H04B C03C |
| A | WO 99 00685 A (SECR DEFENCE ;BIRKS TIMOTHY ADAM (GB); KNIGHT JONATHAN CAVE (GB);) 7 January 1999 (1999-01-07) * page 2, last paragraph - page 4, paragraph 1 * * page 18, last paragraph - page 20, last paragraph * | 1 | |

~~The present search report has been drawn up for all claims~~

| Place of search | Date of completion of the search | Examiner |
|---|---|---|
| BERLIN | 25 July 2001 | Ciarrocca, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

**LACK OF UNITY OF INVENTION SHEET B**

Application Number

EP 00 20 3181

The Search Division considers that the present European patent application does not comply with the requirements of unity of invention and relates to several inventions or groups of inventions, namely:

1. Claims: 1-4

   Monomode optical fiber for 480-550 nm wavelength transmission with numerical aperture <0.1 and core radius > 2 microns, and having multiple claddings.

2. Claims: 5-7

   Monomode optical fiber for 480-550 nm wavelength transmission with numerical aperture <0.1 and core radius > 2 microns, with resilient material for limiting bend radius.

3. Claim : 8

   Monomode optical fiber for 480-550 nm wavelength transmission with numerical aperture <0.1 and core radius > 2 microns, with inclined end-face.

4. Claims: 9,10

   Monomode optical fiber for 480-550 nm wavelength transmission with numerical aperture <0.1 and core radius > 2 microns, with end piece having a cavity.

ANNEX TO THE EUROPEAN SEARCH REPORT
ON EUROPEAN PATENT APPLICATION NO. EP 00 20 3181

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2001

| Patent document cited in search report | | Publication date | Patent family member(s) | | Publication date |
|---|---|---|---|---|---|
| GB 1412884 | A | 05-11-1975 | DE | 2203140 A | 16-08-1973 |
| | | | FR | 2169155 A | 07-09-1973 |
| | | | IT | 977597 B | 20-09-1974 |
| | | | JP | 48087849 A | 17-11-1973 |
| | | | NL | 7300896 A | 26-07-1973 |
| | | | SE | 380001 B | 27-10-1975 |
| | | | US | 3966300 A | 29-06-1976 |
| US 3997241 | A | 14-12-1976 | JP | 1095279 C | 27-04-1982 |
| | | | JP | 50015565 A | 19-02-1975 |
| | | | JP | 55025643 B | 08-07-1980 |
| | | | US | RE32475 E | 18-08-1987 |
| DE 3128174 | A | 03-02-1983 | NONE | | |
| US 4089586 | A | 16-05-1978 | BE | 855912 A | 17-10-1977 |
| | | | DE | 2728126 A | 05-01-1978 |
| | | | FR | 2356164 A | 20-01-1978 |
| | | | GB | 1570767 A | 09-07-1980 |
| | | | IT | 1083541 B | 21-05-1985 |
| | | | JP | 53001035 A | 07-01-1978 |
| | | | NL | 7706838 A | 28-12-1977 |
| US 5640473 | A | 17-06-1997 | DE | 19728201 A | 15-01-1998 |
| | | | FR | 2753804 A | 27-03-1998 |
| | | | GB | 2314990 A | 14-01-1998 |
| | | | JP | 10071741 A | 17-03-1998 |
| WO 9900685 | A | 07-01-1999 | AU | 8116998 A | 19-01-1999 |
| | | | CN | 1269020 T | 04-10-2000 |
| | | | EP | 0991967 A | 12-04-2000 |
| | | | GB | 2341457 A | 15-03-2000 |

EPO FORM P0459

For more details about this annex : see Official Journal of the European Patent Office, No. 12/82